# DEMANDE DE BREVET EUROPEEN

(11) **EP 3 671 763 A1**
(43) Date de publication de la demande: **24.06.2020**
(21) Numéro de dépôt: 19217680.8
(22) Date de dépôt: 18.12.2019
(51) Int. Cl.: H01B 3/00, H01B 3/44, H01B 7/28

(54) **CÂBLE ÉLECTRIQUE COMPRENANT AU MOINS UNE COUCHE RÉTICULÉE**

(30) Priorité: 20.12.2018 FR 1873709
(71) Demandeur: Nexans, 92400 Courbevoie (FR)
(72) Inventeur: SAHYOUN, Jihane, 69100 VILLEURBANNE (FR); MARTY, Jean-Michel, 69110 SAINTE FOY LES LYON (FR); GUFFOND, Raphaël, 69007 LYON (FR)
(74) Mandataire: Ipsilon

(57) **Abrégé**

La présente invention concerne un câble électrique (1) comprenant au moins un conducteur électrique allongé (2) et au moins une couche réticulée (3,4,5) entourant ledit conducteur électrique allongé, ladite couche réticulée étant obtenue à partir d'une composition polymère comprenant au moins un polymère, caractérisé en ce que la composition polymère comprend en outre au moins une nano-charge silanisée ayant une surface spécifique (BET) d'au moins 50 m²/g.

## Description

La présente invention se rapporte à un câble électrique comprenant au moins une couche réticulée.

Elle s'applique typiquement, mais non exclusivement, aux domaines des câbles d'énergie à basse tension (notamment inférieure à 6kV), à moyenne tension (notamment de 6 à 45-60 kV) ou à haute tension (notamment supérieur à 60 kV, et pouvant aller jusqu'à 800 kV), qu'ils soient à courant continu ou alternatif.

Dans les câbles hautes tensions, il est connu que des nano-charges ajoutées à une composition polymère peuvent être utilisées pour améliorer la résistance au claquage.

Ceci étant, il existe toujours un besoin d'avoir des câbles ayant une résistance au claquage diélectrique de plus en plus élevée tout en garantissant un faible courant de fuite.

Le but de la présente invention est de pallier les inconvénients des techniques de l'art antérieur en proposant un câble électrique comprenant au moins une couche réticulée, présentant une résistance améliorée au claquage diélectrique, tout en garantissant notamment un faible courant de fuite.

La présente invention a pour objet un câble électrique comprenant au moins un conducteur électrique allongé et au moins une couche réticulée entourant ledit conducteur électrique allongé, ladite couche réticulée étant obtenue à partir d'une composition polymère comprenant au moins un polymère, caractérisé en ce que la composition polymère comprend en outre au moins une nano-charge silanisée ayant une surface spécifique (BET) d'au moins 50 m²/g, et de préférence d'au moins 70 m²/g.

Grâce à l'invention, la couche réticulée présente de très bonnes propriétés de résistance au claquage diélectrique en courant continu, notamment à 70°C.

En outre, la couche réticulée de l'invention présente un courant de fuite réduit, permettant de l'utiliser avantageusement en tant que couche électriquement isolante d'un câble électrique, notamment d'un câble haute tension en courant continu, bien connu sous l'anglicisme « *High Voltage Direct Current »* (HVDC).

Par ailleurs, la couche réticulée de l'invention présente une résistance au vieillissement améliorée, même à des températures de fonctionnement du câble supérieure à 80°C, telles que par exemple de l'ordre de 90°C-110°C.

Enfin, la couche réticulée de l'invention permet avantageusement de réduire significativement la concentration de charges d'espace, et donc de réduire significativement le renforcement de champ électrique en présence de sous-produit(s) de réticulation.

### La nano-charge silanisée

La nano-charge silanisée de l'invention est plus particulièrement une charge dite traitée.

On entend par « charge traitée » une charge ayant subi un traitement de surface, ou en d'autres termes, une charge traitée en surface. Ledit traitement de surface permet notamment de modifier les propriétés de surface de la charge.

Le traitement de surface utilisé pour obtenir une nano-charge silanisée est notamment un traitement de surface à partir d'au moins un composé silane (avec ou sans agent de couplage), ce type de traitement de surface étant bien connu de l'homme du métier. Ainsi, la nano-charge silanisée de l'invention peut comprendre à sa surface des groupements siloxane et/ou silane. Lesdits groupements peuvent être du type vinylsilane, alkylsilane, epoxysilane, methacryloxysilane, acryloxysilane, aminosilane ou mercaptosilane.

Le composé silane utilisé pour obtenir la nanoparticule silanisée peut être choisi de préférence parmi :
- des alkyltriméthoxysilane ou des alkyltriéthoxysilane, tels que par exemple octadecyltriméthoxysilane (OdTMS - C18), octyl(triéthoxy)silane (OTES - C8), methyl triméthoxysilane, hexadecyl triméthoxysilane,
- des vinyltriméthoxysilane ou des vinyltriéthoxysilane,
- des méthacryloxylsilane ou des acryloxysilane, tels que par exemple 3-méthacryloxypropyl methyldiméthoxysilane, 3-méthacryloxypropyl triméthoxysilane, 3-méthacryloxypropyl triméthoxysilane, 3-acryloxypropyl triméthoxysilane, et/ou
- un de leurs mélanges.

La nano-charge de l'invention peut être de préférence une nano-charge inorganique pouvant être choisie parmi les carbonates de métaux alcalino-terreux, les sulfates de métaux alcalino-terreux, les oxydes métalliques, les oxydes de métalloïdes, les silicates métalliques, et les siloxanes (ou oligomères tri-dimensionnels organosiliciés).

A titre d'exemple :
- les nano-charges de carbonates de métaux alcalino-terreux peuvent être des nano-charges de carbonate de calcium,
- les nano-charges de sulfates de métaux alcalino-terreux peuvent être des nano-charges de sulfate de baryum,
- les nano-charges d'oxydes métalliques, ou en d'autres termes des nano-charges comprenant uniquement un ou plusieurs éléments oxygène et un ou plusieurs éléments métalliques, peuvent être des nano-charges d'alumine (Al₂O₃), d'oxyde de zinc (ZnO), de dioxyde de titane (TiO₂), d'oxyde de magnésium (MgO), d'oxydes de fer (Fe₂O₃, Fe₃O₄),
- les nano-charges d'oxydes de métalloïdes peuvent être des nano-charges de dioxyde de silicium (silice), notamment des nano-charges de silice pyrogénée, l'expression « silice pyrogénée » étant bien connue sous l'anglicisme « fumed silica »,
- les nano-charges de silicate métalliques peuvent être par exemple des aluminosilicates (nano-clay), ou des nano-charges de silicate d'aluminium et de magnésium hydraté telles que la montmorillonite appartenant à la famille des phyllosilicates,
- les nano-charges de siloxanes ou d'oligomères tri-dimensionnels organosiliciés peuvent être des nano-charges de silsesquioxanes (POSS) ou ses dérivés, tels que par exemple des nano-charges de Trisilanolphényl Polyhedral SilSesquioxane (TP-POSS).

La nano-charge de l'invention étant une nano-charge silanisée, les exemples cités ci-dessus sont donc des nano-charges destinées à être silanisées. Les nano-charges destinées à être silanisées sont plus particulièrement des nano-charges inorganiques comprenant des fonctions chimiques permettant à la nano-charge d'être traitée, telles que par exemple des fonctions hydrogène.

De préférence, les nano-charges de l'invention peuvent être des nano-charges d'oxydes métalliques silanisées.

Dans la présente invention, la surface spécifique (BET) de la nano-charge silanisée est d'au moins 50 m²/g, de préférence d'au moins 70 m²/g, de préférence d'au moins 80 m²/g, et de préférence d'au moins 100 m²/g. La nano-charge silanisée peut avoir une surface spécifique BET d'au plus 1000 m²/g, et de préférence d'au plus 500 m²/g.

Dans la présente invention, la surface spécifique d'une nano-charge silanisée peut être facilement déterminée selon la norme DIN 9277 (2010).

La nano-charge silanisée de l'invention est une charge de dimension nanométrique.

La ou les nano-charge(s) silanisée(s) de l'invention ont typiquement au moins une de leurs dimensions de taille nanométrique (10⁻⁹ mètre).

Dans la présente invention, on entend par « nano-charge silanisée » une particule élémentaire. Un ensemble de particules élémentaires peut être un agglomérat ou agrégat de particules élémentaires, selon les dimensions.

Plus particulièrement, la ou les nano-charge(s) silanisée(s) de l'invention (i.e. une ou des particules élémentaires) peu(ven)t avoir au moins une de leurs dimensions d'au plus 1000 nm (nanomètres), de préférence d'au plus 800 nm, de préférence d'au plus 600 nm, de préférence d'au plus 400 nm et plus préférentiellement d'au plus 100 nm.

En outre, la ou les nano-charge(s) silanisée(s)de l'invention peu(ven)t avoir au moins une de leurs dimensions d'au moins 1 nm, et de préférence d'au moins 5 nm.

De préférence, la ou les nano-charge(s) silanisée(s) de l'invention peu(ven)t avoir au moins une de leurs dimensions allant de 1 à 800 nm.

En considérant plusieurs nano-charges silanisées selon l'invention, on entend par le terme « dimension », la dimension moyenne en nombre de l'ensemble des nano-charges silanisées d'une population donnée, cette dimension étant classiquement déterminée par des méthodes bien connues de l'homme du métier.

La dimension de la ou des nano-charges silanisée(s) selon l'invention peut être par exemple déterminée par microscopie, notamment par microscope électronique à balayage (MEB) ou par microscope électronique à transmission (MET). Plus particulièrement, la dimension de la ou des nano-charges silanisée(s) dans la composition polymère de l'invention peut être déterminée par MET sur au moins une vingtaine de clichés, par préparation d'échantillons de composition polymère à -140°C environ avec des épaisseurs de 100 nm environ, les échantillons étant ensuite positionnés sur un support en cuivre pour l'observation par MET. On appelle cette technique de préparation la cryo-ultramicrotomie.

Au moins une des nano-charges silanisée(s), ou plus particulièrement les nano-charges silanisée(s) comprises dans la composition polymère, peu(ven)t avoir :
- un facteur de forme sensiblement égal à 1 : on parle alors de nano-charge isodimensionnelle, ou
- un facteur de forme supérieur à 1, de préférence d'au moins 10, et de préférence d'au moins 100.

Dans la présente invention, le facteur de forme est typiquement le rapport entre la plus grande dimension d'une nano-charge silanisée (telle que par exemple la longueur d'une nano-charge silanisée lorsqu'elle est du type lamellaire ou cylindrique) et la plus petite dimension de la nano-charge silanisée (telle que par exemple l'épaisseur d'une nano-charge silanisée du type lamellaire, ou le diamètre d'une nano-charge silanisée du type cylindrique).

La composition polymère de l'invention peut comprendre au plus 5,0% en poids de nano-charge silanisée, et de préférence au plus 2,0% en poids de nano-charge silanisée, et de préférence au plus 1,5% en poids de nano-charge silanisée, par rapport au poids total de la composition polymère.

La composition polymère de l'invention peut comprendre une quantité suffisante de nano-charge silanisée pour obtenir les effets désirés. A titre d'exemple, la composition polymère de l'invention peut comprendre une quantité d'au moins 0,1% en poids de nano-charge silanisée, de préférence d'au moins 0,2% en poids de nano-charge silanisée, et de préférence d'au moins 0,4% en poids de nano-charge silanisée, par rapport au poids total de la composition polymère.

Dans un mode de réalisation particulier, la composition polymère de l'invention peut comprendre une quantité pouvant aller de 0,10 à 0,60 % en volume de nano-charge silanisée, par rapport au poids total de la composition polymère.

La quantité en volume est déterminée à partir de la quantité en poids de nano-charge traitée divisée par la densité réelle (bien connue sous l'anglicisme « true density ») de ladite nano-charge traitée.

La densité réelle, ou masse volumique réelle, prend en compte la masse et le volume des particules qui composent un solide granulaire ou une poudre. La densité réelle ne comprend pas le volume d'air interstitiel, et peut être mesurée à l'aide d'un pycnomètre à gaz selon la norme NF EN ISO 18753.

La densité réelle est donc différente de la densité apparente, ou masse volumique apparente. La densité apparente prend en compte la masse d'un solide granulaire ou d'une poudre, contenue dans un volume donné. Ce volume comprend le volume d'air interstitiel. La densité apparente peut ainsi varier selon que le matériau est plus ou moins tassé, ou au contraire aéré. Elle peut être mesurée à l'aide d'un récipient-mesure selon la Norme NF EN ISO 17828.

### La composition polymère

La composition polymère de l'invention comprend un ou plusieurs polymère(s), de préférence réticulable(s).

On entend par le terme « polymère » tout type de polymères bien connu de l'homme du métier, tels que les homopolymères ou les copolymères (e.g. copolymère séquencé, copolymère statistique, terpolymère, ...etc).

Dans l'invention, le polymère peut être avantageusement un polymère d'oléfine (polyoléfine) ou, en d'autres termes, un homo- ou co-polymère d'oléfine. De préférence, le polymère d'oléfine est un polymère d'éthylène.

La couche polymérique de l'invention peut comprendre au moins un polymère choisi parmi un polyéthylène linéaire basse densité (LLDPE), un polyéthylène basse densité (LDPE), un polyéthylène moyenne densité (MDPE), un polyéthylène haute densité (HDPE), un copolymère d'éthylène et d'acétate de vinyle (EVA), un copolymère d'éthylène et d'alpha-oléfines, un copolymère d'éthylène et de propylène (EPR), et un leurs mélanges.

Comme exemple de copolymère d'éthylène et d'alpha-oléfine, on peut citer par exemple les polyéthylène-octène (PEO).

Comme exemple de copolymères d'éthylène et de propylène (EPR), on peut citer les terpolymères d'éthylène propylène diène (EPDM).

On entend par « haute densité » une densité pouvant aller de 0,941 à 0,965 g/cm³, selon la norme ISO 1183 (à une température de 23°C).

On entend par « moyenne densité » une densité pouvant aller de 0,926 à 0,940 g/cm³, selon la norme ISO 1183 (à une température de 23°C).

On entend par « basse densité » une densité pouvant aller de 0,910 à 0,925 g/cm³, selon la norme ISO 1183 (à une température de 23°C).

On préférera utiliser dans la composition polymère de l'invention au moins un polyéthylène basse densité (LDPE).

Dans un mode de réalisation préférée de l'invention, la composition polymère comprend au moins 70% en poids, de préférence au moins 80% en poids, de préférence au moins 90% en poids, de préférence au moins 95% en poids, et de façon particulièrement préférée au moins 97% en poids, de polymère(s) par rapport au poids total de la composition polymère.

La composition polymère de l'invention est notamment une composition réticulable afin d'obtenir la couche réticulée. A ce titre, la réticulation de la composition polymère peut s'effectuer par les techniques classiques de réticulation bien connues de l'homme du métier telles que par exemple la réticulation peroxyde et/ou l'hydrosilylation sous l'action de la chaleur ; la réticulation silane en présence d'un agent de réticulation ; la réticulation par faisceaux d'électron, rayons gamma, rayons X, ou microondes ; la réticulation par voie photochimique telle que l'irradiation sous rayonnement béta, ou l'irradiation sous rayonnement ultraviolet en présence d'un photo-amorceur. La réticulation préférée est la réticulation peroxyde.

La composition polymère de l'invention peut en outre comprendre un agent de réticulation, de préférence un peroxyde organique. A titre d'exemple, le peroxyde organique peut être choisi parmi les peroxydes aromatiques, aliphatiques, et un de leurs mélanges. On peut notamment citer un peroxyde de dicumyle, un peroxyde de tert-butyl cumyl, et/ou le 2,5-dimethyl-2,5-di(tert-butylperoxy)hexane.

La composition polymère de l'invention peut comprendre une quantité suffisante d'agent de réticulation pour obtenir la réticulation de la couche de l'invention.

A titre d'exemple, la composition polymère peut comprendre de 0,01 à 5% en poids d'agent de réticulation, et de préférence de 0,1 à 2% en poids d'agent de réticulation, par rapport au poids total de la composition polymère.

La composition polymère de l'invention peut en outre comprendre un ou plusieurs additifs.

Les additifs sont bien connus de l'homme du métier et peuvent être choisis parmi des antioxydants, des agents anti-UV, des agents anti-cuivre, des agents anti-arborescences d'eau, des pigments, des co-agents de réticulation, et un de leurs mélanges.

La composition polymère de l'invention peut typiquement comprendre de 0,01 à 5% en poids d'additif(s), et de préférence de 0,1 à 2% en poids d'additifs, par rapport au poids total de la composition polymère.

Plus particulièrement, les antioxydants permettent de protéger la composition polymère des contraintes thermiques engendrées lors des étapes de fabrication du câble et/ou de fonctionnement du câble.

Les antioxydants sont choisis de préférence parmi les phénols encombrés, les thioesters, les antioxydants à base de soufre, les antioxydants à base de phosphore, les antioxydants de type amine, et un de leurs mélanges.

À titre d'exemples de phénols encombrés, on peut citer le Pentaérythritol tétrakis(3-(3,5-di-tert-butyl-4-hydroxyphényl)propionate) (Irganox® 1010), l'octadécyl 3-(3,5-di-tert-butyl-4-hydroxyphényl)propionate (Irganox® 1076), le 1,3,5-triméthyl-2,4,6-tris(3,5-di-tert-butyl-4-hydroxybenzyl)benzène (Irganox® 1330), le 4,6-bis (octylthiométhyl)-o-crésol (Irgastab® KV10), le 2,2'-thiobis(6-tert-butyl-4-méthylphénol) (Irganox® 1081), le 2,2'- thiodiéthylène bis[3-(3,5-di-tert-butyl-4-hydroxyphényl) propionate] (Irganox® 1035), le 2,2'-méthylènebis(6-tert-butyl-4-méthylphénol), le 1,2-bis(3,5-di-tert-butyl-4-hydroxyhydrocinnamoyl) hydrazine (Irganox® MD 1024), ou le 2,2'-oxamido-bis(éthyl-3(3,5-di-tert-butyl-4-hydroxyphényle)propionate).

À titre d'exemples de thioesters, on peut citer le didodécyl-3,3'-thiodipropionate (Irganox® PS800), le distéaryl thiodipropionate (Irganox® PS802) ou le 4,6-bis(octylthiométhyle)-o-crésol (Irganox® 1520).

À titre d'exemples d'antioxydants à base de soufre, on peut citer le dioctadecyl-3,3'-thiodipropionate ou le didodecyl-3,3'-thiodipropionate.

À titre d'exemples d'antioxydants à base de phosphore, on peut citer le tris(2,4-di-tert-butyl-phényle)phosphite (Irgafos® 168) ou le bis(2,4-di-tert-butylphényl)pentaérythritol diphosphite (Ultranox® 626).

À titre d'exemples d'antioxydants de type amine, on peut citer les phénylène diamines (e.g. 1PPD ou 6PPD), les diphénylamine styrène, les diphénylamines, les mercapto benzimidazoles et le 2,2,4-triméthyl-1,2 dihydroquinoline polymérisé (TMQ).

Dans un mode particulier de réalisation, la composition polymère de l'invention peut comprendre moins de 1% en poids, de préférence au plus 0,5% en poids, et de façon particulièrement préférée 0% en poids, de liquide diélectrique par rapport au poids total de la composition polymère. Le liquide diélectrique peut être typiquement une huile, par exemple une huile minérale polaire ou non.

### Le câble électrique

Le câble électrique de l'invention peut être plus particulièrement un câble d'énergie à haute tension (notamment supérieur à 60 kV, et pouvant aller jusqu'à 800 kV), en courant continu.

Le câble électrique de l'invention comprend au moins un conducteur électrique allongé et une ou plusieurs couche(s) réticulée(s) entourant ledit conducteur électrique allongé, la ou lesdites couche(s) réticulée(s) étant obtenue à partir d'une composition polymère telle que définie dans l'invention. La couche réticulée est donc obtenue en réticulant la composition polymère de l'invention.

On entend par « couche réticulée » ou « composition réticulée » dans la présente invention une couche ou composition dont le taux de gel selon la norme ASTM D2765-01 (extraction au xylène) est d'au moins 50%, de préférence d'au moins 70%, de préférence d'au moins 80%, et de façon particulièrement préférée d'au moins 90%.

La couche réticulée de l'invention peut être facilement mise en forme par extrusion autour du conducteur électrique allongé. On parle alors de couche extrudée.

De préférence, l'ensemble des couches du câble de l'invention sont positionnées de façon coaxiale par rapport à l'axe longitudinal du câble électrique.

Le conducteur électrique allongé de l'invention peut être un monoconducteur tel que par exemple un fil métallique, ou un multiconducteur tel qu'une pluralité de fils métalliques, torsadés ou non.

Le conducteur électrique allongé peut être réalisé à partir d'un matériau métallique notamment choisi parmi l'aluminium, un alliage d'aluminium, du cuivre, un alliage de cuivre, et une de leurs combinaisons.

La section nominale du conducteur électrique peut aller de 0,5 mm² à plus de 1200 mm², et de préférence de 50 mm² à 240 mm². La section nominale du conducteur électrique peut notamment être définie selon la norme IEC 60228 (2004).

Le ou les conducteur(s) électrique(s) allongé(s) peuvent être de préférence au centre du câble électrique.

Dans un mode de réalisation préféré, la couche réticulée est une couche électriquement isolante.

Dans la présente invention, on entend notamment par « couche électriquement isolante » une couche dont la conductivité électrique peut être d'au plus 1.10⁻⁸ S/m (siemens par mètre), de préférence d'au plus 1.10⁻⁹ S/m, et de préférence d'au plus 1.10⁻¹⁰ S/m, mesurée à 25°C en courant continu.

Dans un mode de réalisation particulier, le câble électrique de l'invention peut comprendre une première couche semi-conductrice entourant le conducteur électrique allongé, une couche électriquement isolante entourant la première couche semi-conductrice, et une deuxième couche semi-conductrice entourant la couche électriquement isolante, au moins une desdites couches dudit câble étant la couche réticulée.

La première et la deuxième couches semi-conductrices, comme la couche électriquement isolante, sont notamment des couches polymériques, pouvant être extrudées par des techniques bien connues de l'homme du métier.

Les couches semi-conductrices du câble électrique de l'invention peuvent être des couches thermoplastiques ou des couches réticulées, et de préférence des couches réticulées.

De préférence, la couche électriquement isolante dudit câble est la couche réticulée de l'invention.

Dans la présente invention, on entend notamment par « couche semi-conductrice » une couche dont la conductivité électrique peut être strictement supérieure à 1.10⁻⁸ S/m (Siemens par mètre), de préférence d'au moins 1.10⁻³ S/m, et de préférence peut être inférieure à 1.10³ S/m, mesurée à 25°C en courant continu.

La couche semi-conductrice a plus particulièrement une conductivité électrique supérieure à celle d'une couche électriquement isolante. La conductivité électrique de la couche électriquement isolante peut être au moins 10 fois inférieure à la conductivité électrique d'une couche semi-conductrice, de préférence au moins 100 fois inférieure à la conductivité électrique d'une couche semi-conductrice, et de façon particulièrement préférée au moins 1000 fois inférieure à la conductivité électrique d'une couche semi-conductrice.

La première couche semi-conductrice, la couche électriquement isolante et la deuxième couche semi-conductrice peuvent constituer une isolation tricouche. En d'autres termes, la couche électriquement isolante peut être en contact physique direct avec la première couche semi-conductrice, et la deuxième couche semi-conductrice peut être en contact physique direct avec la couche électriquement isolante.

Le câble peut comprendre en outre une gaine électriquement isolante entourant la deuxième couche semi-conductrice, et peut être en contact physique direct avec celle-ci.

Le câble électrique peut comprendre en outre un écran métallique entourant la deuxième couche semi-conductrice. Dans ce cas, la gaine électriquement isolante peut entourer ledit écran métallique.

Cet écran métallique peut être un écran dit « filaire » composé d'un ensemble de conducteurs en cuivre ou en aluminium arrangé autour et le long de la deuxième couche semi-conductrice, un écran dit « rubané » composé d'un ou de plusieurs rubans métalliques conducteurs en cuivre ou en aluminium posé(s) éventuellement en hélice autour de la deuxième couche semi-conductrice ou un ruban métallique conducteur en aluminium posé longitudinalement autour de la deuxième couche semi-conductrice et rendu étanche grâce à de la colle dans les zones de chevauchement de parties dudit ruban, ou d'un écran dit « étanche » de type tube métallique composé éventuellement de plomb ou d'alliage de plomb et entourant la deuxième couche semi-conductrice. Ce dernier type d'écran permet notamment de faire barrière à l'humidité ayant tendance à pénétrer le câble électrique en direction radiale.

Tous les types d'écrans métalliques peuvent jouer le rôle de mise à la terre du câble électrique et peuvent ainsi transporter des courants de défaut, par exemple en cas de court-circuit dans le réseau concerné.

D'autres couches, telles que des couches gonflantes en présence d'humidité peuvent être ajoutées entre la deuxième couche semi-conductrice et l'écran métallique, ces couches permettant d'assurer l'étanchéité longitudinale du câble électrique à l'eau.

Selon une autre caractéristique de l'invention, et afin de garantir un câble dit « *Halogen-Free* » ou dit plus particulièrement « HFFR » pour l'anglicisme « *Halogen-Free Flame Retardant* », le câble, ou en d'autres termes les éléments qui composent ledit câble, ne comprend/comprennent de préférence pas de composés halogénés. Ces composés halogénés peuvent être de toutes natures, tels que par exemple des polymères fluorés ou des polymères chlorés comme le polychlorure de vinyle (PVC), le chlorure de polyvinylidène, des plastifiants halogénés, des charges minérales halogénées, ...etc.

Un autre objet de l'invention est un procédé de fabrication d'un câble électrique selon l'invention, comprenant les étapes suivantes :
- extruder la composition polymère telle que définie dans l'invention, autour d'au moins un conducteur électrique allongé,
- réticuler la composition polymère extrudée, pour obtenir une couche réticulée.

L'extrusion peut être réalisée par tout procédé bien connu de l'homme du métier, notamment à l'aide d'une extrudeuse, par exemple de type monovis.

Préalablement à l'étape d'extrusion, le procédé peut en outre comprendre une étape de mélange d'au moins le polymère avec au moins la nano-charge, bien connue sous le nom de mélange-maître, puis une étape de formation de granulés. L'étape de mélange peut se faire en utilisant une extrudeuse bis-vis, un mélangeur BUSS, ou tout autre appareil bien connu de l'homme du métier.

L'étape d'extrusion, et optionnellement l'étape de mélange préalable (i.e. formation d'un mélange-maître), sont notamment réalisées à l'état fondu, ou en d'autres termes elles ne sont pas réalisées en présence d'un solvent apolaire et/ou organique. A titre d'exemple, l'étape d'extrusion, et optionnellement l'étape de mélange préalable, ne sont pas réalisées en présence de n-heptane.

De préférence, le procédé de fabrication d'un câble électrique de l'invention ne comprend aucune étape réalisée en présence d'un solvent apolaire et/ou organique. A titre d'exemple, le procédé de fabrication d'un câble électrique de l'invention ne comprend aucune étape réalisée en présence de n-heptane.

On entend par état fondu une température suffisante pour rendre le polymère (de la composition polymère) malléable, sans pour autant dégrader thermiquement ledit polymère. Plus particulièrement, le traitement thermique pour rendre le polymère malléable peut se faire au-dessus de la température de fusion dudit polymère lorsqu'il est cristallin ou semi-cristallin, et au-dessus de la température de transition vitreuse dudit polymère lorsqu'il est amorphe.

Dans la présente invention, la température de fusion et/ou de transition vitreuse du polymère peuvent être classiquement mesurées par analyse calorimétrique différentielle (DSC) avec une rampe de température de 10°C/min sous atmosphère d'azote.

La réticulation peut être réalisée par tout procédé bien connu de l'homme du métier. A titre d'exemple, lorsque la composition comprend un agent de réticulation du type peroxyde organique, la réticulation s'effectue par décomposition du peroxyde lors du passage du câble par exemple dans un tube de vulcanisation sous pression. L'agent de réticulation peut être ajouté à différentes étapes du procédé de fabrication du câble, telles que par exemple préalablement à l'étape d'extrusion ou pendant l'étape d'extrusion.

D'autres caractéristiques et avantages de la présente invention apparaîtront à la lumière de la description d'exemples non limitatifs de compositions selon l'invention et de câble selon l'invention fait en référence à la figure suivante.

### Brève description des dessins

[Fig. 1]

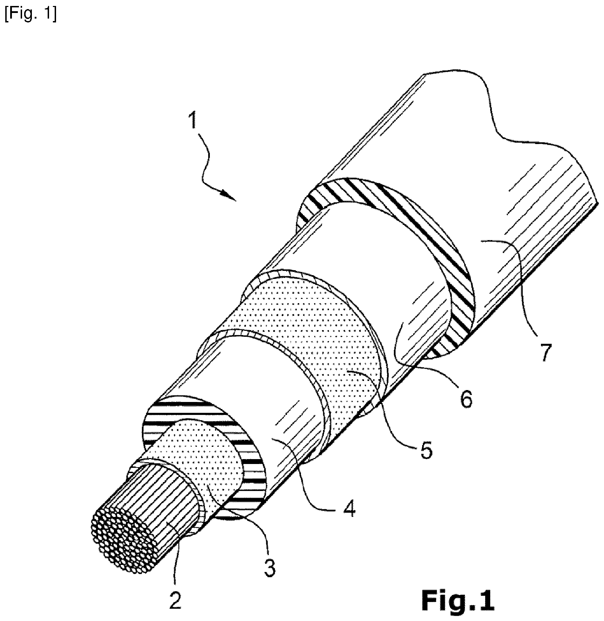

La figure 1 représente une vue schématique d'un câble électrique selon un mode de réalisation préféré conforme à l'invention.

Pour des raisons de clarté, seuls les éléments essentiels pour la compréhension de l'invention ont été représentés de manière schématique, et ceci sans respect de l'échelle.

Le câble d'énergie 1 à moyenne ou haute tension, illustré dans la figure 1, comprend un conducteur électrique allongé 2 central, notamment en cuivre ou en aluminium. Le câble d'énergie 1 comprend en outre plusieurs couches disposées successivement et coaxialement autour de ce conducteur électrique allongé 2 central, à savoir : une première couche 3 semi-conductrice dite « couche semi-conductrice interne », une couche 4 électriquement isolante, une deuxième couche 5 semi-conductrice dite « couche semi-conductrice externe », un écran métallique 6 de mise à la terre et/ou de protection, et une gaine extérieure de protection 7.

La couche 4 électriquement isolante est une couche extrudée réticulée, obtenue à partir de la composition polymère selon l'invention.

Les couches semi-conductrices 3 et 5 sont des couches extrudées réticulées.

La présence de l'écran métallique 6 et de la gaine extérieure de protection 7 est préférentielle, mais non essentielle, cette structure de câble étant en tant que telle bien connue de l'homme du métier.

### EXEMPLES

### 1. Compositions polymères

Le tableau 1 ci-dessous rassemble des compositions polymères dont les quantités des composés sont exprimées en parties en poids pour cent parties en poids de polymère(s) dans la composition polymère.

Les compositions I1 et I2 sont des compositions polymères conformes à l'invention, et les compositions C1, C2 et C3 sont des compositions polymères comparatives.

Un unique polymère a été utilisé dans les compositions I1, I2, C1, C2 et C3.

**[Tableau 1]**

| **Compositions polymères** | **I1** | **C1** | **C2** | **I2** | **C3** |
|---|---|---|---|---|---|
| Polymère | 100 | 100 | 100 | 100 | 100 |
| Nano-charge 1 | 0,7 | 0 | 0 | 0,7 | 0 |
| Nano-charge 2 | 0 | 0 | 1,0 | 0 | 0 |
| Antioxydant | 0,25 | 0,25 | 0,25 | 0,15 | 0,15 |
| Agent de réticulation | 1,72 | 1,72 | 1,72 | 0,80 | 0,80 |

L'origine des composés du tableau 1 est la suivante :
- Polymère est un polymère d'éthylène basse densité (LDPE) commercialisé par la société Ineos sous la référence BPD2000, ayant une densité de 923 kg/m³ (selon la norme ISO 1183-2) ;
- Nano-charge 1 est un oxyde d'aluminium (Al₂O₃) traité avec un octyl-silane, commercialisé par la société Evonik sous la référence Aeroxide Alu C 805, cette nano-charge ayant les caractéristiques suivantes : particules élémentaires isodimensionnelles de dimensions comprises entre 15 et 25 nm, surface spécifique (BET) de 100 m²/g, et densité réelle de 3,97 g/cm³ ;
- Nano-charge 2 est un oxyde de zinc (ZnO) traité avec un octyl-silane, commercialisé par la société Nanophase sous la référence NanoArc ZN-8407, cette nano-charge ayant les caractéristiques suivantes : particules élémentaires allongées dont la plus grande dimension est d'environ 40 nm, surface spécifique (BET) de 33 m²/g, et densité réelle de 5,68 g/cm³;
- Antioxydant commercialisé par la société Addivant sous la référence Lowinox TBP-6 qui est un thiophenol encombré (2,2'-thiobis(6-t-butyl-4-methylphenol) ; et
- Agent de réticulation du type peroxyde organique, commercialisé par la société Arkema, sous la référence Luperox 801 (peroxyde de tert-butyl cumyle).

Les quantités en pourcentage en poids des nanoparticules utilisés dans les compositions polymères I1 et C2 correspondent sensiblement à une même quantité en pourcentage volumique (i.e. environ 0,18% en volume).

### 2. Préparation des compositions polymères pour leurs caractérisations

Les nano-charges du tableau 1 utilisées dans les compositions I1, I2 et C2 sont étuvées à 80°C pendant 48 heures, puis passées aux ultrasons pendant une dizaine de minutes.

Des mélange-maîtres (i.e. *masterbatchs*) de polymère de la composition, chargés de 20 à 30 % en poids de nano-charges, sont préparés dans un mélangeur interne, à 120°C, pendant 20 minutes. Ensuite, plusieurs étapes de dilution avec une extrudeuse bi-vis, équipée d'un profil de vis dispersif-distributif, ont permis d'atteindre les quantités en poids indiquées dans la tableau 1. Le mélange ainsi extrudé est refroidi puis granulé.

Afin de faciliter l'imprégnation, lesdits granulés sont ensuite préchauffés à 60°C avant d'être imprégnés par un mélange comprenant l'agent de réticulation et l'antioxydant, pendant 3 heures.

Pour les compositions C1 et C3 qui ne comprennent pas de nano-charge, les granulés de polymère ont directement été imprégnés comme indiqué ci-dessus, l'étape de mélange-maître n'ayant pas été réalisée.

Enfin, les granulés imprégnés sont placés à 40°C pendant 16 heures pour terminer la pénétration à cœur du liquide, avant d'être stockés hermétiquement.

### 3. Caractérisation des compositions polymères sur plaque réticulée : mesure de propriétés thermo-mécaniques

Pour le test du fluage à chaud, des plaques de 1 mm d'épaisseur sont moulées à partir des granulés imprégnés. Le moulage se fait sous presse hydraulique à une température de 120°C, suivant un cycle de 2 minutes sans pression puis un cycle de 3 minutes sous 50 bars. Les plaques sont ensuite refroidies sous une pression de 50 bars.

L'étape de réticulation se fait sous presse, à la température de 190°C, sous 50 bars, pendant 10 minutes. Les moules sont préalablement préchauffés à 190°C. L'étape de refroidissement se fait sous pression maintenue à 50 bars.

La mesure du fluage à chaud d'un matériau sous contrainte mécanique, quant à elle, est déterminée selon la norme NF EN 60811-2-1. Ce test est communément désigné par l'anglicisme Hot Set Test (HST) et consiste à lester une extrémité d'une éprouvette, de type haltère H2, avec une masse correspondant à l'application d'une contrainte équivalente à 0,2MPa (i.e. 20 N/cm²), et à placer l'ensemble dans une étuve chauffée à 200+/-1°C, pendant une durée de 15 minutes.

Au terme de ce délai, on relève l'allongement maximal à chaud sous contrainte de l'éprouvette, exprimé en %. La masse suspendue est alors retirée, et l'éprouvette est maintenue dans l'étuve pendant 5 nouvelles minutes.

L'éprouvette est alors sortie de l'étuve et l'allongement permanent résiduel, également appelé rémanence (ou élongation rémanente), est mesuré, lorsque l'éprouvette est revenue à la température ambiante. La rémanence est exprimée en %.

On rappelle que plus un matériau est réticulé, plus les valeurs d'allongement maximal sous contrainte et de rémanence seront faibles.

Par exemple, selon les exigences indiquées dans la norme IEC 62067 pour les câbles hautes tensions, les valeurs d'allongement maximal sous contrainte (i.e. 20N/cm²), sont inférieures à 175%, et celles de rémanence sont inférieures à 15%.

En outre, le taux de gel selon la norme ASTM D2765-01 (extraction au xylène) est également mesuré.

### 4. Caractérisation des compositions polymères sur plaque réticulée : mesure de propriétés de tenue au vieillissement thermique

La mesure de tenue au vieillissement thermique est déterminée selon la norme NF EN 60811-1-2. Elle consiste à mesurer, sur éprouvettes de type H2, à intervalles de temps réguliers (i.e. 14 jours), les valeurs de contrainte et d'allongement à la rupture et de les comparer aux valeurs mesurées à l'initiale, avant vieillissement.

Le vieillissement est effectué en étuve à convection naturelle à la température de 135°C. Les éprouvettes sont testées au minimum 16h après la sortie de l'étuve. Les variations de contrainte et d'allongement à la rupture après vieillissement sont exprimées en %. Par exemple, selon les recommandations de la norme IEC 62067, un composé isolant devrait passer 168h (7 jours) à 135°C, en maintenant des variations de propriétés mécaniques (résistance et allongement à la rupture) inférieures à ±25%.

### 5. Caractérisation des compositions polymères sur plaque réticulée : mesure de propriétés électriques

La mesure du courant de fuite, exprimé en ampère (A), est réalisée selon la procédure *"Conductivity Measurement Method",* conformément aux méthodes d'essai pour le courant en volume et le courant de surface des matériaux isolants électriques solides, norme 60093, 1980, en appliquant une tension continue (FUG HCP 140-12500) sur une plaque d'échantillon. La valeur du courant est obtenue en mesurant la tension (avec un module NI PXI 4072) aux bornes d'une résistance calibrée de 100 MΩ.

Le signal est enregistré sur un ordinateur par le logiciel LabVIEW. Une étuve est utilisée pour contrôler la température durant les mesures, tandis qu'une protection contre les surtensions assure la protection de l'électromètre des dommages en cas de dépassement éventuel (de pics de tension).

Un système à trois électrodes en laiton est utilisé, avec des diamètres de 90mm et de 70mm pour les électrodes de haute tension et de mesure du courant, respectivement. L'électrode de garde sert à éliminer les courants de surface.

Les mesures sont menées sur des plaques réticulées, d'épaisseur 350µm environ, telles que réalisées au point 4 ci-dessus, et préalablement dégazées dans une étuve à 60°C, pendant plusieurs jours, permettant une élimination complète des sous-produits de décomposition du peroxyde.

La mesure est réalisée à 70°C, pendant environ 1,2.10⁶s (i.e. 336 h). Une tension de 12,5kV est appliquée, correspondant à un champ électrique de 40kV/mm.

Le test est répété trois fois pour chaque matériau afin d'évaluer la reproductibilité.

La rigidité diélectrique (ou résistance au claquage diélectrique), exprimée en kilovolt par millimètre (kV/mm), est mesurée à l'aide d'un dispositif comprenant deux électrodes demi-sphériques en inox de diamètre 20mm environ (une électrode sous tension et l'autre à la masse) et une huile diélectrique, commercialisée par la société Bluestar Silicones sous la référence Rhodorsil 604 V 50, à 70°C. Par définition, la rigidité diélectrique est le rapport entre la tension de claquage et l'épaisseur de l'échantillon. Une fibre optique est placée sur l'électrode supérieure pour enregistrer la température à proximité de l'endroit de claquage.

Une montée en tension par palier est appliquée sur une plaque réticulée et dégazée, d'épaisseur 700µm environ, telle que réalisée au point 4 ci-dessus. La méthode consiste à démarrer l'essai à 50kV (courant continu), puis à augmenter la tension de 5kV toutes les 30 minutes, en laissant un certain temps de stabilisation (polarisation, injection de charge, accumulation de charge d'espace), jusqu'au claquage du matériau.

Chaque matériau testé est composé de 10 échantillons et les résultats font l'objet d'un traitement Weibull 2 paramètres.

Pour la mesure de la charge d'espace, une des techniques acoustiques connue est la technique PEA ou à impulsions électro-acoustiques (en anglais « Pulsed Electro-Acoustic »). Elle comporte l'application à l'échantillon d'une impulsion de champ électrique extérieur, qui résulte en une impulsion mécanique en provenance des charges contenues dans un matériau diélectrique. Le champ électrique extérieur induit en effet une force de perturbation sur les charges, entraînant une oscillation légère et rapide de ces charges, et ainsi la création de vibrations acoustiques dans le matériau diélectrique. Ces ondes de pression acoustiques sont proportionnelles à la densité locale des charges dans l'échantillon.

La concentration de la charge d'espace, exprimée en Coulomb par mètre cube (C/m³), est mesurée en appliquant un échelon de tension (FUG HCP 35-3500) sur une plaque d'échantillon. L'onde acoustique résultante est mesurée à l'aide d'un capteur piézo-électrique. La variation de tension au cours du temps délivrée par le capteur est mesurée à l'aide d'un oscilloscope et enregistrée sur un ordinateur par le logiciel LabVIEW. Le signal est traité par le logiciel MatLab pour obtenir la variation de concentration de charge d'espace et le renforcement de champ électrique, exprimé en %, en fonction de la profondeur dans le matériau.

La mesure est réalisée à 30°C, pendant environ 8,64.10⁴s (i.e. 24 h). Une tension de 20kV est appliquée, correspondant à un champ électrique de 40kV/mm.

Le test est répété trois fois pour chaque matériau afin d'évaluer la reproductibilité.

### 6. Résultats

Les résultats des différents tests, sur échantillons dégazés, sont rassemblés dans le tableau 2 ci-dessous

L'étape de dégazage des échantillons est réalisée dans une étuve ventilée, avec des températures de 60-70°C, pendant une durée d'au moins 48 heures.

**[Tableau 2]**

| | **I1** | **C1** | **C2** |
|---|---|---|---|
| Taux de gel (exprimé en %) | > 80 | > 80 | > 80 |
| Allongement maximal à chaud (exprimé en %), sous une contrainte 20 N/cm² | 50-55 | 50-55 | 50-55 |
| Rémanence (exprimée en %) | 0-5 | 0-5 | 0-5 |
| Résistance au claquage diélectrique (exprimée en kV/mm), en courant continu à 70°C | 275 | 175 | 205 |
| Courant de fuite (exprimé en A), à 70°C sous 40kV/mm | 1,7.10⁻¹⁰ | 3,4.10⁻⁰⁹ | 3,1.10⁻¹⁰ |
| Durée t (exprimée en jours) de vieillissement thermique à 135°C, pour des variations mécaniques (traction, allongement) ± ≤25% | 56<t<70 | t>56 | 14<t<28 |

D'autres résultats ont été obtenus sur échantillons non-dégazés, ces résultats étant rassemblés dans le tableau 3 ci-dessous.

**[Tableau 3]**

| | **I2** | **C3** |
|---|---|---|
| Concentration de charges d'espace totale (C/m³), à 30°C sous 40kV/mm sur échantillons non-dégazés | 0,33 | 0,65 |
| Renforcement de champ électrique (%), à 30°C sous 40kV/mm sur échantillons non-dégazés | 7,5 | 23 |

## Revendications

1. Câble électrique (1) comprenant au moins un conducteur électrique allongé (2) et au moins une couche réticulée (3,4,5) entourant ledit conducteur électrique allongé, ladite couche réticulée étant obtenue à partir d'une composition polymère comprenant au moins un polymère, **caractérisé en ce que** la composition polymère comprend en outre au moins une nano-charge silanisée ayant une surface spécifique (BET) d'au moins 50 m²/g.

2. Câble selon la revendication 1, **caractérisé en ce que** la nano-charge silanisée a une surface spécifique (BET) d'au moins 70 m²/g.

3. Câble selon la revendication 1 ou 2, **caractérisé en ce que** la nano-charge est choisie parmi les carbonates de métaux alcalino-terreux, les sulfates de métaux alcalino-terreux, les oxydes métalliques, les oxydes de métalloïdes, les silicates métalliques, et les siloxanes.

4. Câble selon l'une quelconque des revendications précédentes, **caractérisé en ce que** la nano-charge est choisie parmi l'alumine (Al₂O₃), l'oxyde de zinc (ZnO), le dioxyde de titane (TiO₂), et les oxydes de fer (Fe₂O₃, Fe₃O₄).

5. Câble selon l'une quelconque des revendications précédentes, **caractérisé en ce que** la nano-charge silanisée est un oxyde métallique silanisée.

6. Câble selon l'une quelconque des revendications précédentes, **caractérisé en ce que** la nano-charge comprend des groupements siloxane et/ou silane.

7. Câble selon l'une quelconque des revendications précédentes, **caractérisé en ce que** la nano-charge a au moins une de ses dimensions d'au plus 1000 nm.

8. Câble selon l'une quelconque des revendications précédentes, **caractérisé en ce que** la composition polymère comprend au plus 5,0% en poids desdites nano-charge(s) par rapport au poids total de la composition polymère, et de préférence au plus 2,0% en poids desdites nano-charge(s) par rapport au poids total de la composition polymère.

9. Câble selon l'une quelconque des revendications précédentes, **caractérisé en ce que** la composition polymère comprend au moins 70% en poids de polymère(s), par rapport au poids total de la composition polymère.

10. Câble selon l'une quelconque des revendications précédentes, **caractérisé en ce que** le polymère est un polymère d'éthylène, et de préférence un polymère d'éthylène basse densité (LDPE).

11. Câble selon l'une quelconque des revendications précédentes, **caractérisé en ce que** la composition polymère comprend en outre un agent de réticulation.

12. Câble selon l'une quelconque des revendications précédentes, **caractérisé en ce que** la composition polymère comprend en outre un antioxydant.

13. Câble selon l'une quelconque des revendications précédentes, **caractérisé en ce que** la couche réticulée est une couche électriquement isolante.

14. Câble selon l'une quelconque des revendications précédentes, **caractérisé en ce que** la couche réticulée est une couche extrudée.

15. Câble selon l'une quelconque des revendications précédentes, **caractérisé en ce que** le câble (1) comprend une première couche semi-conductrice (3) entourant le conducteur électrique allongé (2), une couche électriquement isolante (4) entourant la première couche semi-conductrice (3), et une deuxième couche semi-conductrice (5) entourant la couche électriquement isolante (4), au moins une desdites couches (3,4,5) dudit câble étant la couche réticulée.
